# EUROPEAN PATENT APPLICATION

(11) **EP 2 982 335 A1**
(43) Date of publication of application: **10.02.2016**
(21) Application number: 14882769.4
(22) Date of filing: 20.08.2014
(51) Int. Cl.: A61C 13/34, A61C 13/38

(54) **METHOD FOR MANUFACTURING DENTAL MODEL**

(30) Priority: 16.04.2014 KR 20140045566
(71) Applicant: Robots And Design Co. Ltd., Seongnam-si, Gyeonggi-do 463-760 (KR)
(72) Inventor: The designation of the inventor has not yet been filed
(74) Representative: Kuhnen & Wacker
(86) International application number: PCT/KR2014/007722
(87) International publication number: WO 2015/160044

(57) **Abstract**

Disclosed herein is a method for manufacturing a dental model including a model base (2) on which dental-model bodies (1) for upper and lower jaws are disposed. The method includes: a scanning operation (100) of scanning teeth or a dental impression of a patient and obtaining dental information about the shape of target teeth; an image model creation operation (200) of conducting imagification based on the dental information obtained in the scanning operation and thus embodying an image model; and a CAM processing operation (300) of forming a dental model (3) through a milling process using CAM based on the image model. The image model and the dental model respectively obtained in the image model creation operation and the CAM processing operation are designed and formed such that a dental-model body of the target teeth and the model base are integrated with each other.

## Description

### Technical Field

The present invention generally relates to methods for manufacturing dental models. More particularly, the present invention relates to a method for manufacturing a dental model used in dental treatment, wherein in designing, processing, and manufacturing the dental model, time required to process the dental model can be reduced whereby productivity can be enhanced, and an error in occlusion between upper and lower jaws can be removed, so that the precision of the occlusion can be increased.

### Background Art

Generally, dental and oral cavity systems are body parts closely related to the health of the whole body rather than being independent organs, and are controlled under physiological principles and biochemical laws. Further, dental and oral cavity systems function as sensitive indicators of body conditions.

Recently, as interest in health and beauty has increased, industries related to the dental medical field have also rapidly expanded, and significant related research is being conducted in the field.

For example, research is being conducted in various fields related to three-dimensional visualization of dental information using digitization and computer-graphic processing of anatomical structures, manufacture of an artificial tooth using a CAD (computer aided design) or ·CAM (computer aided manufacturing) technique, precise reproduction of impressions or dies of false teeth, etc.

A prosthetic processing machine was proposed in Korean Patent Registration No. 10-1329732. This conventional prosthetic processing machine includes a processing tray that is provided for mounting a teeth-set mold (m) that is a basic material for forming dental-model bodies for upper and lower jaws, and a processing tool that is provided with a cutter for cutting and machining the dental mold mounted on the processing tray.

In the conventional prosthetic processing machine having the above-mentioned construction, a plurality of teeth-set molds (m) for forming dental-model bodies for upper and lower jaws are mounted on the processing tray. Thereafter, an image file obtained by scanning the oral structure of a patient with an oral scanner is input to a computer, and the teeth-set molds are machined to form dental-model bodies by a processing tool that is operated based on a set design program.

However, in the conventional prosthetic processing machine, because the teeth-set molds for forming dental-model bodies for upper and lower jaws are separately provided and mounted on the processing tray, a machining error occurs. In this case, when the dental-model bodies formed through the above process are used for measurement of occlusion between the upper and lower jaws, accurate dental diagnosis is impossible because of low precision.

Furthermore, when it is desired to manufacture dental models that embody the oral shape of the patient by means of attaching the separately-formed dental-model bodies for upper and lower jaws to an articulator, such models are manually manufactured by dental technicians. Therefore, there are problems in that a skilled technique is required, and time required for machining is increased.

Recently, there have been various efforts to overcome the above-mentioned problems. A representative example was proposed in Korean Patent Registration No. 10-1329732 (title: MODEL ASSEMBLY FOR MANUFACTURING DENTAL MODELS). As described in the gazette, this conventional model assembly for manufacturing dental models includes: horseshoe teeth-set molds that become a basic material for forming the shape of all of the teeth of the upper and lower jaws; a plurality of model bases that are provided to support the teeth-set molds, and used in measuring conditions of occlusion between upper and lower jaws and used as parts of the dental models; a center base, the upper and lower outer surfaces of which are closely coupled to the respective model bases so that the teeth-set molds are disposed facing each other, and which is removably mounted to a prosthetic processing machine; and a dental mold that is further provided on a front end of the canter base and becomes a basic material for forming an abutment.

In this conventional technique, the dental model refers to a model that includes an oral structure model formed by a combination of the dental-model bodies and the model base to which the dental-model bodies are coupled, and a model tail functioning as a fastener for fastening the oral structure model to the articulator.

Here, each dental-model body includes a gum part, a restoration-tooth die (or stump), and a normal-tooth part.

### Disclosure

### Technical Problem

However, in the conventional dental model having the above-mentioned construction, the restoration-tooth die, a model base to which the dental-model bodies for target teeth are coupled, and the model tails are separately manufactured before being assembled with each other.

Consequently, an assembly error between the restoration-tooth die and the dental-model bodies occurs, thus reducing the degree of precision. Furthermore, because of a machining error and an assembly error between the dental-model bodies and the model base, the degree of precision is further reduced. In addition, the model base, the dental-model bodies, and the restoration-tooth die are individually processed by separate machines. Thus, time required for machining is increased, and the degree of precision is reduced because of a machining error between the dental-model bodies and the model base.

Furthermore, because the model base and the dental-model bodies are individually processed by separate machines, there may be an error depending on characteristics of the machines, thus causing a problem of deterioration in quality.

Moreover, it is required to assemble the restoration-tooth die with the dental-model bodies and assemble dental-model bodies with the model base. Therefore, an assembly error is caused, thus making it difficult to produce a high-quality product.

Accordingly, the present invention has been made keeping in mind the above problems occurring in the prior art, and an object of the present invention is to provide a method for manufacturing a dental model, which is used in dental treatment, whereby time required to process the dental model can be reduced and thus the productivity can be enhanced and, particularly, an assembly error between a model base, a restoration-tooth die, and dental-model bodies of the dental model can be fundamentally removed, whereby precision in occlusion between the upper and lower jaws can be enhanced, and a high-quality dental model can be obtained. Furthermore, the method of the present invention can be easily applied not only to some of teeth but also to all of the teeth.

Another object of the present invention is to provide a method for manufacturing a dental model in which when an image model is designed in a graphic design based on a scanning data model for target teeth, a dental-model body for teeth to be restored is integrally designed with the model base, and the dental model can be integrally processed by milling without the dental-model body being separated from the model base, whereby the economic feasibility can be enhanced.

A further object of the present invention is to provide a method for manufacturing a dental model in which an image model of the dental model is designed such that a margin line of the dental-model body is set and an offset portion to be removed based on the margin line is defined, and in which when milling operation is conducted, cutting operation is conducted in the same direction as the direction in which the tooth die is coupled to the dental-model body, whereby the area of an unprocessed portion in processing the restoration-tooth die can be minimized, and the quality of the dental model can be further enhanced.

### Technical Solution

In order to accomplish the above object, the present invention provides a method for manufacturing a dental model including a model base on which dental-model bodies for upper and lower jaws are disposed, the method including: a scanning operation of scanning teeth or a dental impression of a patient and obtaining dental information about a shape of target teeth; an image model creation operation of conducting imagification based on the dental information obtained in the scanning operation and thus embodying an image model; and a CAM (computer aided manufacturing) processing operation of forming a dental model through a milling process using CAM based on the image model created in the image model creation operation, wherein the image model and the dental model respectively obtained in the image model creation operation and the CAM processing operation are designed and formed such that a dental-model body of the target teeth and the model base are integrated with each other.

In the image model creation operation, the image model may be designed in such a way that a margin line is defined based on the dental information obtained from the scanning information, and an offset line defining a ditching portion to be removed based on the margin line is set.

In the CAM processing operation, an outline shape of the dental model may be processed to a depth corresponding to image data set in the image model creation operation and then processed based on information about a ditching portion of the set image model.

In the image model creation operation and the CAM processing operation, the model base and a model tail may be integrally designed and processed by milling to embody the image model and the dental model.

In the CAM processing operation, a cutter (tool) for conducting the milling may be moved, while conducting a cutting operation, in a direction equal to a direction in which a restoration-tooth-model die is coupled to the dental-model body.

The CAM processing operation may be conducted with a link attached to the dental model, the link fastening the dental model to a basic material to prevent the dental model from being removed from the basic material while the processing operation is conducted based on the information about an outline of the dental model.

### Advantageous Effects

In a method for manufacturing a dental model according to the present invention, a model base, a model tail, and dental-model bodies are integrally manufactured by means of CAD or CAM. Thus, time required for processing is reduced, and the productivity can thus be enhanced. Particularly, parts constituting the dental model are integrally designed and processed, whereby an assembly error can be fundamentally removed. Consequently, the precision in occlusion between upper and lower jaws can be increased, and the quality of the dental model can be markedly improved.

### Description of Drawings

Fig. 1 is a flowchart showing a method for manufacturing a dental model according to an embodiment of the present invention;
Fig. 2 is a view illustrating a dental model manufactured by the manufacturing method according to the embodiment of the present invention;
Figs. 3 and 4 are views showing application of the manufacturing method according to the embodiment of the present invention;
Fig. 5 is a view illustrating one of operations of processing the dental model in the manufacturing method according to the embodiment of the present invention;
Fig. 6 is a view illustrating another one of the operations of processing the dental model in the manufacturing method according to the embodiment of the present invention;
Fig. 7 is a view showing an operation of processing the dental model in the manufacturing method according to the embodiment of the present invention;

### Best Mode

Hereinafter, a method for manufacturing a dental model according to a preferred embodiment of the present invention will be described in detail with reference to the attached drawings.

The embodiment of the present invention can be changed in various ways, and the bounds of the present invention are not limited to the embodiment, which will be described in detail herein below. Furthermore, the embodiment of the present invention aims to help those with ordinary knowledge in this art more clearly understand the present invention. Therefore, the shape, etc. of each element may be exaggeratedly expressed in the drawings for the sake of understanding the present invention. Reference now should be made to the drawings, in which the same reference numerals are used throughout the different drawings to designate the same or similar components. Furthermore, detailed descriptions of known functions and elements that may unnecessarily make the gist of the present invention obscure will be omitted.

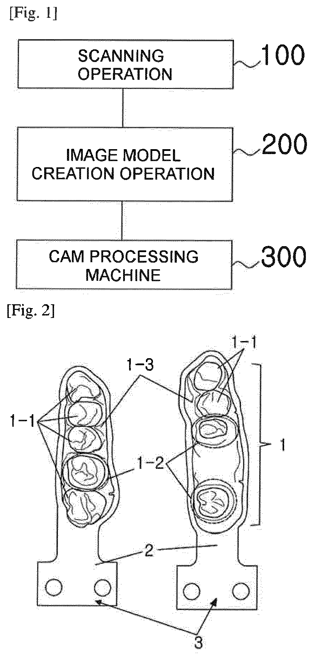

Figs. 1 through 7 are views illustrating a method for manufacturing a dental model according to an embodiment of the present invention. The method according to this embodiment is applied to processing a dental model 3, including a model base 2 on which dental-model bodies 1 for upper and lower jaws are disposed, and a model tail for fastening the model base 2 to an articulator.

As shown in Fig. 2, each dental-model body 1 includes a gum part 1-3, normal-tooth parts 1-1, and restoration-tooth dies 1-2.

First, the relationship between teeth is determined so as to manufacture a dental prosthesis and artificial teeth that match the occlusion and masticating structure of a patient. Thereafter, a dental model 3 for the upper and lower jaws of the patient is formed such that the optimum dental prosthesis and artificial teeth can be manufactured.

Dental models 3 processed by the method of the present invention are coupled to a separate dental-model body articulator by the model tails and then operated to simulate various movements of a dental structure and obtain data about dental occlusion.

The method for manufacturing such a dental model according to the embodiment of the present invention includes a scanning operation 100 of scanning the teeth or dental impression of a patient and obtaining data about the shape of the target teeth.

In detail, an image of the teeth of the patient or the dental impression molded on the teeth is captured and then scanned by a conventional method using a well known technique such as fluoroscopy, whereby information about, for example, the appearance of teeth, the shape of a boundary between the gum and the teeth, etc., is digitized. The digitized data is used as basic data for embodying a dental model for the patient.

The dental model manufacturing method according to this embodiment of the present invention further includes an image model creation operation 200 of creating an image model whereby a desired dental model is embodied as image data by imagifying, a data set based on the dental information of the patient obtained in the scanning operation 100.

Preferably, the set data that provides a basis for information to be imagified is based on a CAD (computer aided design) program.

That is, the desired dental model 3 can be imaginarily manufactured and simulated by the image model embodied as an image using a well known CAD program based on dental information about the dental model 3. Thereby, the quality of the design of the dental model 3 can be enhanced.

Preferably, the image model embodied based on image data of the dental model 3 is used in an occlusion test conducted in an imaginary space embodied by a computer program, whereby design data of the dental model 3 is more precisely embodied.

That is, in an imaginary space, an occlusion test is conducted with an articulator coupled to the dental model. Therefore, the shape of the model base 2 can be easily appropriately designed.

The dental model manufacturing method according to this embodiment of the present invention further includes a CAM (computer aided manufacturing) processing operation 300 of forming a dental model through a milling process using CAM based on information data about the image model created in the image model creation operation 200.

That is, data about the image model design in the image model creation operation 200 is automatically processed by the CAM. As a result, a desired dental model 3 is embodied.

In the dental model manufacturing method according to this embodiment of the present invention, the image model and the dental model 3 that have been formed in the image model creation operation 200 and the CAM processing operation 300 are designed and formed such that the dental-model body 1 of the target teeth and the model base 2 are integrated with each other.

That is, the dental-model body 1 of the dental model 3 is designed and processed integrally with the model base rather than being separated from the model base or being separately processed therefrom. Thus, an assembly error between the model base 2 and the dental-model body 1 can be fundamentally removed, whereby the degree of precision in occlusion can be enhanced.

In the image model creation operation 200 and the CAM processing operation 300, preferably, the model tail and the model base 2 are integrally designed and processed by milling so as to embody the image model and the dental model 3.

That is, the parts of the dental model 3 to be embodied are integrally designed and processed. Thereby, a high-quality dental model 3 can be obtained.

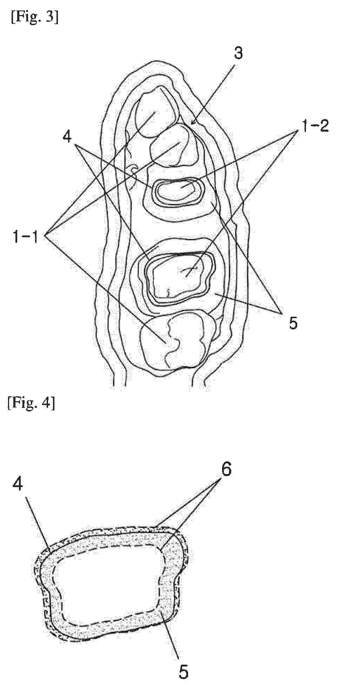

In the image model creation operation 200 of the dental model manufacturing method according to this embodiment of the present invention, as shown in Figs. 3 and 4, the image model is designed in such a way that a margin line 4 is defined based on the dental information obtained from the scanning information 100, and an offset line 6 defining a ditching portion 5 to be removed based on the margin line 4 is set. In the CAM processing operation 300, the dental model 3 is manufactured by milling based on the margin line 4, the ditching portion 5, and the offset lines 6 set in the image model.

That is, for enhancing convenience of the processing operation and precisely processing the margin line 4 of the dental-model body 1, the ditching portion 5 is set in a predetermined portion around the margin line 4. The ditching portion 5 is defined by the offset line 6 that is set in the depth direction and in the width direction based on the margin line 4. Further, the ditching portion 5 has a depth preset based on the margin line 4.

As shown in Fig. 4, preferably, the offset line 6 comprises two curved lines formed around the margin line 4 so that portions around the margin line 4 of the dental-model body 1 can be precisely processed. More preferably, the portion defined between the two offset lines 6 is precisely processed, whereby a high-quality dental model 3 can be obtained.

The purpose of precisely processing the portion between the two offset lines 6 is to process a margin portion of the restoration-tooth die 1-2 as precise as possible and thus make the die appropriate for being covered with a crown or bridge.

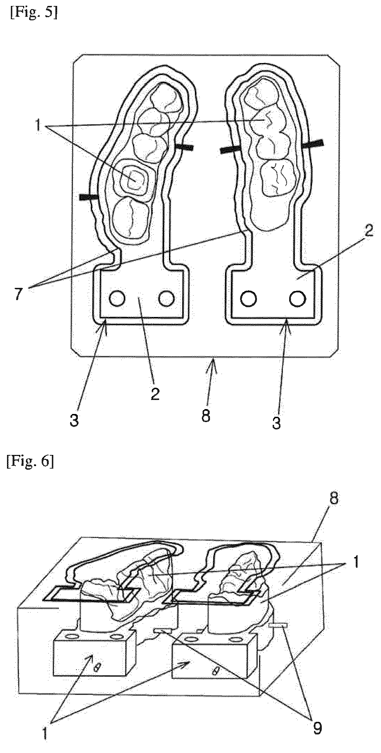

In the CAM processing operation 300 of the dental model manufacturing method according to this embodiment of the present invention, as shown in Fig. 5, preferably, the shape of the dental model 3 is processed to a depth corresponding to the image model set in the image model creation operation 200, and a processing sequence is determined based on information about an outline 7 of the set dental model 3.

Most preferably, the dental model 3 is formed in a sequence whereby a basic material 8 is first processed to form the dental-model body 1 of the dental model 3, and thereafter the outline 7 of the dental model 3 to be fastened to the articulator is processed, thus embodying the model base.

Furthermore, a cutter (tool) used for the milling work in the CAM processing operation 300 is preferably moved, while conducting the cutting work, in the same direction as the direction in which the die for teeth is coupled to the dental-model body 1. In this case, the area of an unprocessed portion of a target tooth can be minimized, and a high-quality dental model 3 can be embodied.

In other words, undercutting of the dental-model body 1 with regard to the direction of movement of the milling cutter can be minimized, whereby the quality of processing can be enhanced.

As stated above, when the dental model 3 is formed by milling using the image model, the milling operation is preferably conducted based on contour line information of a target dental model obtained from the image model, information about a boundary between the gum and the teeth, information about the margin portion of the target teeth, information about the ditching portion, information about the outline of the image model, information about the direction in which the dental-model body 1 is fastened to the model base, etc., whereby the efficiency and precision of the milling operation can be enhanced.

Meanwhile, in the CAM processing operation 300 of the dental model manufacturing method according to this embodiment of the present invention, as shown in Fig. 6, so as to prevent the dental model 2 from being undesirably separated from the basic material 8 while the processing operation is conducted based on the set information about the outline 7 of the dental model 3, it is preferable that after a link 9 for fastening the dental model 3 to the basic material 8 has been attached to the dental model 3, the processing operation is conducted.

If the dental model 3 is separated from the base material 8, the tool may be broken or the dental model 3 may be damaged, and it may be impossible to use a robot to manipulate the dental model 3.

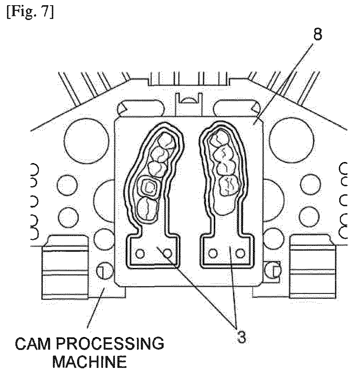

In the dental model manufacturing method according to this embodiment of the present invention, as shown in Fig. 7, the dental models 3 for the upper and lower jaws are preferably processed in such a way that they are separately disposed in a single basic material 8.

Consequently, the dental models for the upper and lower jaws have the same physical properties related to the material, whereby high-quality occlusion data can be obtained.

As described above, in a method for manufacturing a dental model according to an embodiment of the present invention, a normal-tooth-model body and a restoration-tooth die that constitute the dental-model body are integrally designed with each other rather than being separately provided. Thus, time required to process the dental model is reduced, so that productivity can be enhanced. Furthermore, an assembly error can be fundamentally removed, whereby the degree of precision of occlusion can be enhanced.

Although the embodiment of the present invention has been disclosed for illustrative purposes, those skilled in the art will appreciate that various modifications, additions and substitutions are possible, and the present invention is not limited to the above-described embodiments. Therefore, the bounds and scope of the present invention should be defined by the scope and spirit disclosed in the accompanying claims. Furthermore, the present invention should be construed as covering modifications, equivalents or alternatives falling within the scope and spirit of the present invention.

## Claims

1. A method for manufacturing a dental model including a model base on which dental-model bodies for upper and lower jaws are disposed, the method comprising:
a scanning operation of scanning teeth or a dental impression of a patient and obtaining dental information about a shape of target teeth;
an image model creation operation of conducting imagification based on the dental information obtained in the scanning operation and thus embodying an image model; and
a CAM (computer aided manufacturing) processing operation of forming a dental model through a milling process using CAM based on the image model created in the image model creation operation,
wherein the image model and the dental model respectively obtained in the image model creation operation and the CAM processing operation are designed and formed such that a dental-model body of the target teeth and the model base are integrated with each other.

2. The method of claim 1, wherein in the image model creation operation,
the image model is designed in such a way that a margin line is defined based on the dental information obtained from the scanning information, and an offset line defining a ditching portion to be removed based on the margin line is set.

3. The method of claim 1, wherein in the CAM processing operation,
an outline shape of the dental model is processed to a depth corresponding to image data set in the image model creation operation and then processed based on information about a ditching portion of the set image model.

4. The method of claim 1, wherein in the image model creation operation and the CAM processing operation,
the model base and a model tail are integrally designed and processed by milling to embody the image model and the dental model.

5. The method of claim 1, wherein in the CAM processing operation,
a cutter (tool) for conducting the milling is moved, while conducting a cutting operation, in a direction equal to a direction in which a restoration-tooth-model die is coupled to the dental-model body.

6. The method of claim 1, wherein the CAM processing operation is conducted with a link attached to the dental model, the link fastening the dental model to a basic material to prevent the dental model from being removed from the basic material while the processing operation is conducted based on the information about an outline of the dental model.

7. The method of claim 1, wherein a normal-tooth-model body and a restoration-tooth-model die of the dental-model body are integrally designed without being separated from each other.
